# EUROPEAN PATENT APPLICATION

(11) **EP 2 897 326 A1**
(43) Date of publication of application: **22.07.2015**
(21) Application number: 14305077.1
(22) Date of filing: 21.01.2014
(51) Int. Cl.: H04L 12/24, H04L 12/28

(54) **System comprising an access gateway and a wide-area-network modem device, and respective access gateway and wide-area-network modem device**

(71) Applicant: Thomson Licensing, 92130 Issy-les-Moulineaux (FR)
(72) Inventor: De Smedt, Alex, 2250 Olen (BE)
(74) Representative: Arnold, Klaus-Peter

(57) **Abstract**

The system comprises an access gateway (10) and a Wide-Area-Network (WAN) modem device (11) adapted for connecting with a network service provider network for providing Internet services, the access gateway including a discovery manager (13) for a discovery of Layer 2 and Layer 3 devices (2, 3). The discovery manager includes a discovery function being adapted for a device and service discovery of the WAN modem device, and the WAN modem device is configured as a Local-Area-Network (LAN) device and includes a discovery agent (18) for its device and service discovery for an operation with the access gateway.

## Description

### TECHNICAL FIELD

The invention relates to the field of end-user devices, in particular to consumer premises equipment coupled via a broadband connection with a network service provider network for providing Internet services for a home network.

### BACKGROUND OF THE INVENTION

Residential gateways are widely used to connect devices in a home of a customer to the Internet or to any other wide area network (WAN). Residential gateways use in particular digital subscriber line (DSL) technology that enables a high data rate transmission over copper lines or optical lines. During the years, several DSL standards have been established differing in data rates and in range, for example ADSL, ADSL2 and VDSL. Also optical transmission for Internet services is well known, for example fiber-to-the-home (FTTH) and fiber-to-the premises (FTTP). Residential gateways are also named 'home gateways', or access gateways.

Home networks have become part of everyday life for many users. A home network consists of a range of heterogeneous components, which means that the home network is made up of different kinds of devices. All these devices communicate with each other. Examples of networked devices in the home are residential gateways, set-top boxes, television sets, personal computers, tablet PCs, smartphones, network-attached storage (NAS) devices, printers and game consoles. These devices use heterogeneous methods of connectivity to interconnect, which demands for zero-configuration networking and automatic discovery of devices and services. Device and service discovery in the home network is performed by a number of protocols like UPnP DA (Universal Plug and Play device architecture), LLDP (Link Layer Discovery Protocol), LLTD (Microsoft's Link Layer Topology Discovery, Apple's Bonjour, and somewhat limited also DHCP (Dynamic Host Configuration Protocol), ARP (Address Resolution Protocol), etc., wherein the network domain for these protocols is in general restricted to the home network, the Local-Area-Network (LAN) side.

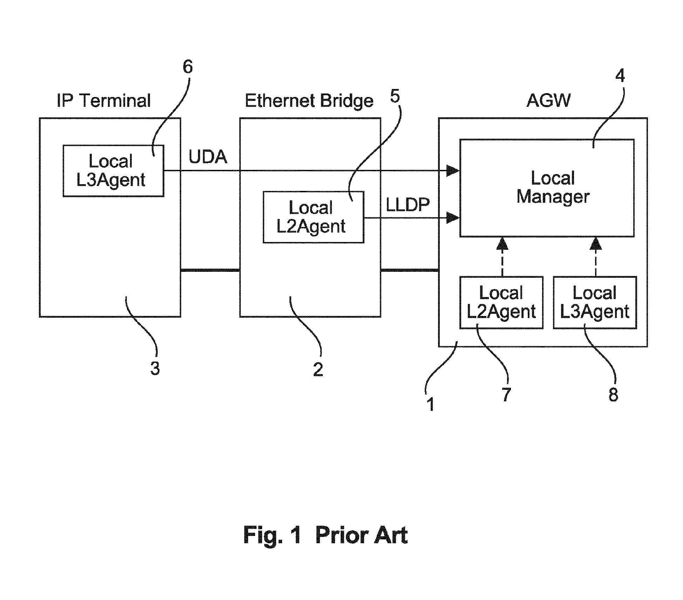

The ITU-T G.9973 recommendation is a protocol from the International Telecommunication Union (ITU) for identifying home network technology, which defines how information about devices, their capabilities, services and topology is retrieved by a gateway. The supported architecture of G.9973 is shown in Fig. 1: The home network includes an access gateway 1, one or several Layer 2 devices, for example an Ethernet bridge 2, and one or several Layer 3 devices, for example an IP-terminal 3, e.g. a PC. The access gateway 1 includes a local manager 4, which retrieves the management information of the devices 2, 3 of the home network. The Ethernet bridge 2 includes a local L2 agent 5, which sends device information and a MAC forwarding table to the local manager 4 by using a Link Layer Discovery Protocol (LLDP). The IP terminal 3 includes a local L3 agent 3, which sends device information to the local manager 4 by utilizing a Universal Plug and Play Device Architecture protocol (UDA). The local manager 4 can reside in any device of the IP home network. Fig. 1 shows a typical case where the local manager resides in the access gateway 1.

The access gateway 1 includes further a local L2 agent 7 and a local L3 agent 8 in this embodiment representing devices directly attached to the access gateway and sending additional device information to the local manager 4, via which the local manager 4 can identify the IP home network topology by analysing the collection of this management information. The device information as provided by the local L2 agent 5 and the local L3 agent 6 comprise the following information: a device category, which represents the category of each device, such as a TV or DVD recorder; a manufacturer code, which represents the company that produced the device; a model name, which represents the device's brand or series name assigned by the manufacturer; and the model number, which represents the device model number assigned by the manufacturer.

There are a number of lacks of the ITU-T G.9973 recommendation, one of them being that the standard does not take into account that a modem providing Wide Area Network (WAN) access for the home network may be a different physical device connected to the access gateway, and that the access gateway can obtain device info from the modem.

US 7,418,486 describes a method for automatic discovery and configuration of LAN side home network devices, which, for remote communication, involves detecting whether a gateway device is installed between a LAN and a WAN, by a Universal Plug and Play architecture. The device information is presented to a user for configuring a software firewall for securing the discovered devices. An application programming interface configures the software of the device based on the received information.

### SUMMARY OF THE INVENTION

The system according to the invention comprises an access gateway and a Wide-Area-Network (WAN) modem device adapted for connecting with a network service provider network for providing Internet services, wherein the access gateway includes a discovery manager for a discovery of Layer 2 and Layer 3 devices. The discovery manager includes a discovery function being adapted for a device and service discovery of the WAN modem device, and the WAN modem device is configured as a Local-Area-Network (LAN) device for its device and service discovery for an operation with the access gateway. The WAN modem device indicates in particular its service and device information towards the access gateway and/or responds to protocol requests from the access gateway asking for the service and device information, after being connected to the access gateway.

In a preferred embodiment, the WAN modem device is configured as a Layer 2 LAN device for its device and service discovery, and the discovery manager communicates via an Ethernet bridge with a local L2 agent in the WAN modem device over an Ethernet connection. Any Layer 2 discovery protocol can be used therefore for the device and service discovery of the WAN modem device. For example, LLDP can be used as the Layer 2 protocol and the discovery manager includes a LLDP Layer 2 manager and the WAN modem device includes a LLDP Layer 2 agent for the device and service discovery.

In an aspect of the invention, the access gateway includes a TR-069 data model for providing a remote auto-configuration of the access gateway, including a data submodel for the WAN modem device. The device and discovery data received from the the WAN modem device can be utilized accordingly to complete WAN interface parameters in the TR-069 data model.

In a further aspect of the invention, the WAN modem device is a Gigabit Passive Optical Network (GPON) modem device or a VDSL modem device and includes a physical layer for operation with the network service provider network, and the access gateway is a residential gateway or an enterprise gateway being connected via Ethernet with the WAN modem device.

### BRIEF DESCRIPTION OF THE DRAWINGS

Preferred embodiments of the invention are explained in more detail below by way of example with reference to schematic drawings, which show:
- Fig. 1: a home network including a residential gateway according to prior art,
- Fig. 2: a home network including a residential gateway and a Wide-Area-Network modem device according to the invention, and
- Fig. 3: a system in accordance with Fig. 2, being configured for operating with a Layer 2 LLDP protocol.

### DETAILED DESCRIPTION OF PREFERRED EMBODIMENTS

In the following description, a system comprising an access gateway and a physically separate Wide-Area-Network modem device is described, wherein the access gateway includes a discovery manager for a discovery of Layer 2 and Layer 3 devices and wherein the Wide-Area-Network modem device is adapted for connecting with a service provider network for providing Internet services. For purposes of explanation, numerous specific details are set forth in order to provide a thorough understanding of preferred embodiments. It will be evident, however, to one skilled in the art that the present invention may be practiced without these specific details.

The access gateway is for example a residential gateway, an enterprise gateway, a router or a switch, and includes a central processing unit, a non-volatile memory in which an operating system and applications are stored, and a volatile memory for the operation of the access gateway. The access gateway may include further hardware and software components for providing for example gateway and switching functions for a home network, and may include further FXS functions, VoIP functionality and Wi-Fi operation.

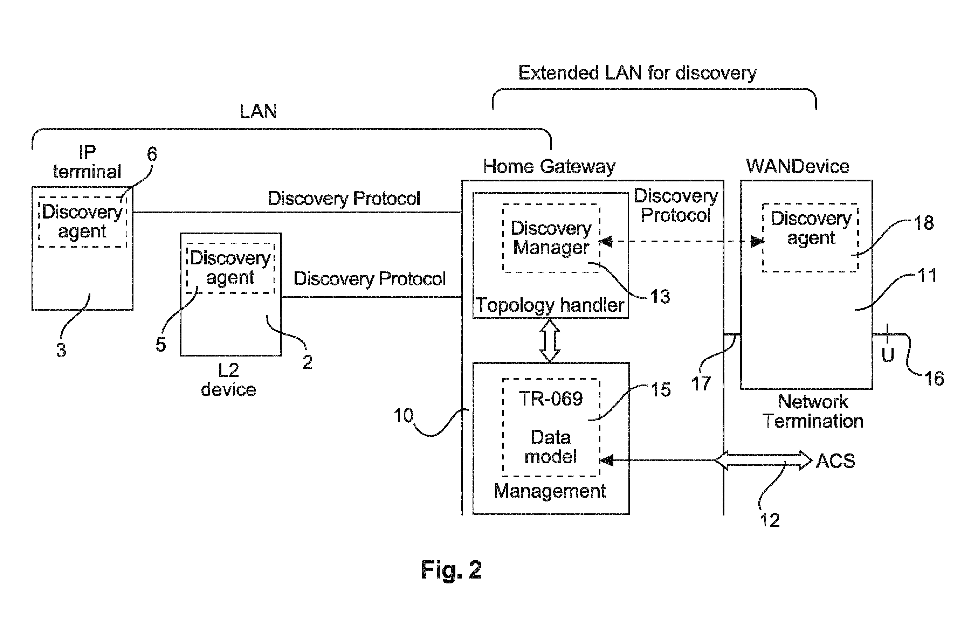

In Fig. 2, a residential gateway 10 is depicted in a simplified manner, which is adapted for operation with a network service provider (NSP) network and with the Internet for providing Internet services for a user of the residential gateway 10. The residential gateway 10 is a part of a home network comprising a multitude of devices, for example a Layer 2 device 2 and a Layer 3 device 3, as described with regard to Fig. 1. The residential gateway 10 includes further a discovery manager 13 for a discovery of the Layer 2 and Layer 3 devices 2 and 3, respectively. The residential gateway 10 comprises further a TR-069 data model 15 for operation with the NSP network. Via an auto configuration server (ACS) of the NSP network, auto configuration and life cycle management 12 of the residential gateway 10 can be performed.

The residential gateway 10 is further adapted to operate with a wide area network (WAN) modem device 11, which includes an interface 16 for a connection with the NSP network to provide the Internet services. The WAN modem device 11 is for example a Gigabit Passive Optical Network (GPON) modem and is connected in this embodiment via Ethernet via an Ethernet cable 17 with the residential gateway 10.

According to the invention, the WAN modem device 11 includes a discovery function, for example performed by a discovery agent 18, via which the WAN modem device 11 acts as a Local-Area-Network (LAN) device within the home network. The WAN modem device 11 is therefore accessible by the discovery manager 13 by using a Layer 2 or Layer 3 protocol, depending on the configuration of the WAN modem device 11. The discovery manager 13 is for example a local manager comprising a local Layer 2 agent and a local Layer 3 agent according to an ITU-T G.9973 recommendation for the discovery of Layer 2 and Layer 3 devices. The discovery agent 18 is advantageously a Layer 2 agent in accordance with the G.9973 recommendation.

In this embodiment, the WAN modem device 11 is a separate box, via which the home network can be upgraded for providing an improved high-speed Internet access. Because the WAN modem device 11 is arranged between the residential gateway 10 and the NSP network, prior art WAN modem devices are not considered part of the home network and therefore LAN discovery protocols cannot be applied for such WAN modem devices. Prior art residential gateways therefore do not have an automatic configuration mechanism to check what type of WAN modem device is connected to it for an automatic configuration. With the invention, the residential gateway 10 can use known Layer 2 and Layer 3 discovery protocols for service and device discovery of the WAN modem device, so that a user configuration for the WAN modem device is not necessary. It is further possible to answer remote management requests regarding the WAN modem device 11 from the ACS server of the NSP network by using a TR-069 management protocol, by using the discovered WAN modem device information.

By extending the Layer 2 and Layer 3 device and service discovery protocols towards the WAN modem device 11, the residential gateway 10 is able to identify the WAN modem device 11 and its characteristics automatically. Standard protocols as described for example in the ITU-T G.9973 recommendation, the LLDP protocol for Layer 2 devices and the UPnP DA protocol for the Layer 3 devices as described with regard to Fig. 1, may be used. The LLDP protocol discovers device and service information via the Ethernet protocol. A Layer 3 discovery protocol like described in UPnP Device Architecture does the same via Internet Protocol as a carrier. But also any other Layer 2 or Layer 3 protocol may be used for device and service discovery of capabilities and services of the WAN modem device 11.

With the invention, the WAN modem device behaves therefore as a LAN device within the home network with regard to service and discovery functionality. The invention is therefore in particular applicable to all cases in which the WAN modem device is separate from the residential gateway, and wherein both are connected for example via an Ethernet interface.

The discovery agent 18 of the WAN modem device 11 includes in particular a first function for advertising itself towards the LAN side: e.g. the residential gateway 10, for indicating its service and device discovery information, and a second function: to respond to known protocol requests from the LAN side asking for service and device information of the WAN modem device 11. The data as provided by the second function can be used particularly to complete WAN interface parameters in a data submodel for the WAN modem device of the TR-069 data model 15 as included in the residential gateway 10.

For the device discovery, the WAN modem device 11 is therefore considered as another LAN device, and gets the discovery requests as any other LAN device inside the home network will get. The WAN modem device 11 will also automatically report respective discovery information, if that is foreseen in the particular discovery protocol that it supports. The protocol to be addressed can be either depend on Ethernet for any Layer 2 based discovery protocol, or on the Internet protocol for any Layer 3 based discovery protocol. Either of these data transfers can be used, depending on whether the WAN modem device 11 supports a Layer 2 based discovery protocol or a Layer 3 based discovery protocol.

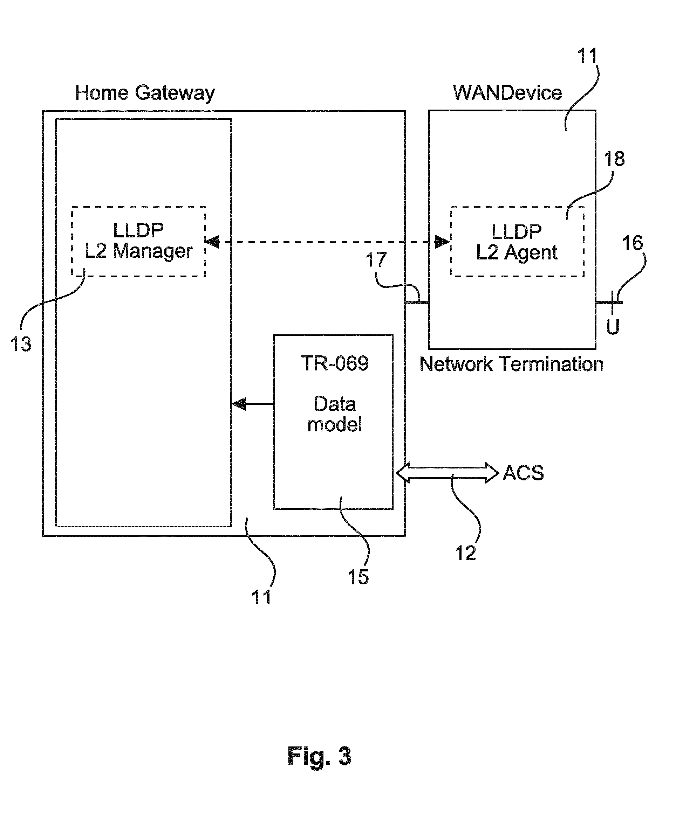

A preferred embodiment for a system comprising a residential gateway 10 and an optical WAN modem device 11, wherein the residential gateway 10 includes a discovery manager 13 and the optical WAN modem device 11 includes a discovery agent 18, both being configured for operating with a Layer 2 LLDP protocol, is depicted in Fig. 3. For the optical WAN modem device 11, therefore Ethernet frames can be used for the device and service discovery of the optical WAN modem device 11. A remote management of the optical WAN modem device 11 can be performed via the TR-069 protocol by an auto configuration server of the NSP network, as described with regard to Fig. 2. The optical WAN modem device 11 is arranged as a separate box and is connected with the residential gateway 11 via an Ethernet cable 17.

This solution is advantageous with regard to a solution using a Layer 3 protocol for device and service discovery, because for Layer 3 devices, Internet protocol addressing is needed, for which network address translation and other technologies have to be involved. The invention provides therefore a solution for a device and service discovery of a WAN modem device being separate from the access gateway for an automatic configuration of the WAN modem device. The device type and characteristics of the WAN modem device are discovered advantageously by using a standard Layer 2, alternatively a Layer 3 protocol, as described for example in the G.9973 recommendation. When the access gateway has recognized the WAN modem device, it can send further dedicated requests to the WAN modem device, for example for maintenance purposes. The characteristics of the WAN modem device can be managed in addition via TR-069 by an auto configuration server of the NSP network.

Also other embodiments of the invention may be utilized by one skilled in the art without departing from the scope of the present invention. The invention is in particular not restricted to residential gateways and covers also enterprise gateways or any other access gateways. The invention resides therefore in the claims herein after appended.

## Claims

1. A system comprising an access gateway (10) and a Wide-Area-Network (WAN) modem device (11) adapted for connecting with a network service provider network for providing Internet services, the access gateway (10) including a discovery manager (13) for a discovery of Layer 2 and Layer 3 devices (2, 3), **wherein**
the discovery manager (13) further includes a discovery function being adapted for a device and service discovery of the WAN modem device (11), and
the WAN modem device (11) is configured as a Local-Area-Network (LAN) device and includes a discovery agent (18) for its device and service discovery for operation with the access gateway (10).

2. The system of claim 1, wherein the WAN modem device (11), after being connected to the access gateway (10), indicates its service and device information towards the access gateway (10) and/or responds to protocol requests from the access gateway asking for the service and device information.

3. The system of claim 1 or 2, wherein the WAN modem device (11) is configured as a Layer 2 device for its device and service discovery.

4. The system of claim 3, wherein the discovery agent (18) in the WAN modem device (11) is a local L2 agent and wherein the discovery manager (13) communicates via an Ethernet bridge over an Ethernet connection (17) with the local L2 agent.

5. The system of one of the preceding claims, wherein a Link Layer Discovery Protocol (LLDP) is used for the device and service discovery of the WAN modem device (11), and wherein the discovery manager (13) includes a LLDP Layer 2 manager and the WAN modem device includes a LLDP Layer 2 agent (18) for the device and service discovery.

6. The system of one of the preceding claims, wherein the discovery manager (13) is adapted for discovering devices and services via communication with a local Layer 2 agent or a local Layer 3 agent according to an ITU-T G.9973 recommendation for the discovery of Layer 2 and Layer 3 devices.

7. The system of one of the preceding claims, wherein the access gateway (10) includes a TR-069 data model for providing a remote auto-configuration of the access gateway (10), including a data submodel for the WAN modem device (11).

8. The system of claim 7, wherein device and discovery data received from the the WAN modem device (11) are utilized to complete WAN interface parameters in the TR-069 data model.

9. The access gateway of one of the preceding claims, wherein the WAN modem device is a Gigabit Passive Optical Network (GPON) modem device or a VDSL modem device and includes a physical layer for communication with the network service provider network.

10. An access gateway (10) for a system according to one of the preceding claims.

11. The access gateway (10) of claim 10, wherein the access gateway is a residential gateway or an enterprise gateway.

12. A WAN modem device (11) for a system according to one of the preceding claims 1-9.

13. The WAN modem device (11) of claim 12, wherein the WAN modem device is a VDSL modem device or a Gigabit Passive Optical Network (GPON) modem device.
